# EUROPÄISCHE PATENTSCHRIFT

(11) **EP 3 548 779 B1**
(45) Veröffentlichungstag und Bekanntmachung des Hinweises auf die Patenterteilung: **16.09.2020**
(21) Anmeldenummer: 17780345.9
(22) Anmeldetag: 26.09.2017
(51) Int. Cl.: F16J 15/34

(54) **GLEITRINGDICHTUNGSANORDNUNG MIT MINIMALER LECKAGE**
MECHANICAL SEAL ASSEMBLY WITH MINIMAL LEAKAGE
ENSEMBLE JOINT D'ÉTANCHÉITÉ À BAGUE GLISSANTE À RÉDUCTION DES FUITES

(30) Priorität: 29.11.2016 DE 102016223636
(43) Veröffentlichungstag der Anmeldung: 09.10.2019
(73) Patentinhaber: EagleBurgmann Germany GmbH & Co. KG, 82515 Wolfratshausen (DE)
(72) Erfinder: OTSCHIK, Joachim, 82418 Murnau (DE); SCHRÜFER, Andreas, 82515 Wolfratshausen (DE); THELKE, Jörg, 82515 Wolfratshausen (DE); SCHICKTANZ, Rudolf, 82538 Geretsried (DE); LABATUT-STOLLE, Christine, 82515 Wolfratshausen (DE); SIMIC, Aleksandar, 82377 Penzberg (DE); REITBERGER, Joachim, 82515 Wolfratshausen (DE)
(74) Vertreter: Hoefer & Partner Patentanwälte mbB
(86) Internationale Anmeldenummer: PCT/EP2017/074343
(87) Internationale Veröffentlichungsnummer: WO 2018/099627

(56) Entgegenhaltungen:
- WO-A1-2014/161704
- DE-B3-102014 203 569

## Beschreibung

Die Erfindung betrifft eine Gleitringdichtungsanordnung mit einer minimalen Leckage, wobei die Gleitringdichtungsanordnung nahezu dicht ist und höchstens eine atomare Leckage aufweist.

Gleitringdichtungen sind aus dem Stand der Technik in unterschiedlichen Ausgestaltungen bekannt. Üblicherweise umfasst eine Gleitringdichtung einen rotierenden Gleitring und einen stationären Gleitring, welche zwischen sich einen Dichtspalt definieren (Ziehe WO-A-2014/161704). Im Dichtspalt ist üblicherweise ein Schmiermittel angeordnet, welches gasförmig oder flüssig sein kann. Prinzipbedingt ergibt sich somit immer eine gewisse Leckage über den Dichtspalt. Um zu vermeiden, dass ein abzudichtendes Produkt an die Umwelt gelangt, sind daher häufig die Druckverhältnisse derart gewählt, dass ein äußerer Druck höher gewählt ist als der Druck des Produkts, sodass die Leckage in Richtung des Produkts geht. Alternativ sind auch sogenannte Tandem-Anordnungen bekannt, bei denen zwei Gleitringdichtungen in Reihe geschaltet sind. Zwischen den in Reihe geschalteten Gleitringdichtungen wird ein Sperrfluid eingeführt. Durch verschiedene Maßnahmen kann dabei auch bei einem höheren Produktdruck als dem Sperrfluiddruck eine Leckage an die Umwelt vermieden werden. Dies bedingt jedoch jeweils hohe Montage- und Investitionskosten. Auch ist bei vielen Anwendungen häufig ein axialer Bauraum zur Anordnung von Tandem-Dichtungen nicht vorhanden.

Es ist daher Aufgabe der vorliegenden Erfindung, eine Gleitringdichtungsanordnung bereitzustellen, welche bei einfachem Aufbau und einfacher, kostengünstiger Herstellbarkeit eine sichere Abdichtung ermöglicht und trotzdem nur eine minimale Leckage bei geringem Verschleiß der Gleitflächen und langer Lebensdauer der Gleitringdichtungsanordnung aufweist.

Diese Aufgabe wird durch eine Gleitringdichtungsanordnung mit den Merkmalen des Anspruchs 1 gelöst. Die Unteransprüche zeigen bevorzugte Weiterbildungen der Erfindung.

Die erfindungsgemäße Gleitringdichtungsanordnung mit den Merkmalen des Anspruchs 1 ermöglicht es erstmals, im technischen Gebiet von Gleitringdichtungen, dass praktisch keine Leckage im Betrieb auftritt. Maximal tritt eine atomare Leckage auf, d. h. einzelne Atome eines Schmiermittels zwischen den Gleitringen oder eines abzudichtenden Produkts, welches als Schmiermittel verwendet wird, treten als Leckage auf. Somit sind erstmals nahezu dichte Gleitringdichtungen möglich. Da im Betrieb praktisch keine Leckage auftritt, sind sonst übliche Nebenaggregate von Gleitringdichtungsanordnungen, wie beispielsweise Schmiermittel-Anlagen oder eine zweite Gleitringdichtung zur Absicherung entbehrlich. Die erfindungsgemäße Gleitringdichtungsanordnung bietet somit erstmals eine echte Alternative zu sogenannten Magnetkupplungen, welche eine fluiddichte Trennung ermöglichen. Ein weiterer großer Vorteil der erfindungsgemäßen Gleitringdichtungsanordnung liegt darin, dass praktisch keine Wärme im Betrieb erzeugt wird. Hierdurch können Einrichtungen zur Kühlung der Gleitringe entfallen. Weiterhin ist auch ein praktisch verschleißfreier Betrieb der Gleitringe möglich. Diese überraschenden und ungewöhnlichen Vorteile von Gleitringdichtungen, welche prinzipbedingt aufgrund des Dichtspalts eigentlich immer eine Leckage aufweisen, werden dadurch erreicht, dass einer der beiden Gleitringe eine ebene erste Gleitfläche aufweist und der andere der beiden Gleitringe eine zweite Gleitfläche aufweist, welche eine umlaufend geschlossene Dichtschneide aufweist, die von einem Grundbereich der zweiten Gleitfläche in Richtung zur ersten Gleitfläche vorsteht. Die Dichtschneide bildet eine Art Dichtdamm und weist eine Breite auf der Grundfläche in einem Bereich von 10 bis 500 µm auf. Aufgrund der extrem kleinen Breite wurde der Begriff "Dichtschneide" gewählt. Weiterhin ist wenigstens ein Vorspannelement, insbesondere ein Federelement oder dergleichen, vorgesehen, welches die beiden Gleitringe gegeneinander vorspannt. Die zweite Gleitfläche weist ferner eine Diamantbeschichtung auf, wobei die Dichtschneide an der zweiten Gleitfläche vollständig aus Diamant hergestellt ist. Alternativ weist die zweite Gleitfläche eine Beschichtung aus kubischem Bornitrid auf und die Dichtschneide ist vollständig aus kubischem Bornitrid hergestellt. Bevorzugt sind die beiden Gleitflächen aus dem gleichen Material. Ferner ist zwischen den Gleitflächen ein Fluid vorhanden, welches eingerichtet ist, OH⁻-Ionen oder H+-Ionen abzugeben.

Somit entsteht unter oben genannten Bedingungen zwischen der Dichtschneide und der ebenen Gleitfläche am anderen Gleitring ein stabiler Reibzustand mit extrem kleinen Reibwerten im Bereich von unter 0,02. Das Vorhandensein von OH⁻-Ionen oder H+-lonen bewirkt bei Vorhandensein einer Vorspannung im Betrieb teilweise eine Kontaktreibung zwischen der Dichtschneide und der Ebene der anderen Gleitfläche. Dadurch ist ein Abstand zwischen der Dichtschneide und der ebenen anderen Gleitfläche in einem Bereich von wenigen Å, insbesondere zwischen 2 bis 7 Å möglich. Somit wird eine Gleitringdichtungsanordnung bereitgestellt, welche keinen typischen Dichtspalt aufweist, sondern durch eine Vorspannkraft eine Art Kontakt-Pressung zwischen der Dichtschneide und der ebenen anderen Gleitfläche bereitstellt, wobei durch das Vorhandensein der OH⁻-Ionen und/oder der H+-lonen ein stabiler Reibzustand mit minimalem Reibwert, der praktisch leckagefrei ist, erzielt werden kann. Dies funktioniert nur im Zusammenspiel mit der geringen Breite der Dichtschneide sowie dem OH⁻Ionen-Spender bzw. H+-Ionen-Spender nahe an der Dichtschneide. Durch die Verwendung von Diamant oder kubischem Bornitrid für die Dichtschneide ist diese auch sehr robust und trotz der minimalen Breite auf eine lange Lebensdauer ausgelegt. Hierbei ist es völlig überraschend, dass die Dichtschneide aufgrund ihrer extrem kleinen Breite nicht wie eine Messerschneide wirkt und nicht in die gegenüberliegende ebene erste Gleitfläche einschneidet.

Die Breite der Dichtschneide ist vorzugweise kleiner oder gleich 60 µm und liegt besonders bevorzugt in einem Bereich von 40 µm bis 60 µm. In diesem Bereich hat sich herausgestellt, dass eine besonders dichte Gleitringdichtungsanordnung erreicht werden kann.

Weiter bevorzugt ist die erste Gleitfläche, welche eben ausgestaltet ist, derart vorgesehen, dass die erste Gleitfläche eine mittlere Rauheit Ra in einem Bereich von kleiner gleich 0,2 µm, vorzugsweise kleiner gleich 0,1 µm aufweist. Im Betrieb können durch einen Poliereffekt Rauheiten aufgrund von kurzfristigem Kontakt zwischen der Dichtschneide und der ebenen Gleitfläche erreicht werden, die kleiner als 0,1 µm sind.

Besonders bevorzugt ist ein Belastungsfaktor k (k-Faktor), welcher ein Verhältnis einer druckbelasteten Fläche zwischen den Gleitflächen und der Größe der einander gegenüberliegenden Flächen zwischen den beiden Gleitflächen ist, in einem Bereich von 0 bis 0,3. Aufgrund dieses sehr kleinen Belastungsfaktors k ist eine einfache Auslegung von Baureihen und Gleitringdichtungsanordnungen möglich, da nur der durch die Vorspannung erzeugte Kontaktdruck den maximal abzudichtenden Druck bestimmt.

Weiter bevorzugt weist die ebene erste Gleitfläche eine zirkuläre Ebenheit auf, welche kleiner gleich 5 µm ist. Je ebener die ebene erste Gleitfläche ist, umso geringer ist nachher auch die, wenn auch nur im atomaren Bereich, auftretende Leckage.

Weiter bevorzugt weist die ebene erste Gleitfläche eine Diamantbeschichtung oder eine Beschichtung aus kubischem Bornitrid auf. Besonders bevorzugt sind dabei die Paarungen, in denen die erste und zweite Gleitfläche jeweils eine Diamantbeschichtung aufweist oder die erste und zweite Gleitfläche jeweils eine Beschichtung aus kubischem Bornitrid aufweist. Hierbei werden die besten Ergebnisse hinsichtlich Dichtheit und Lebensdauer der Gleitringdichtungsanordnung erhalten.

Besonders bevorzugt ist eine geometrische Form der Dichtschneide kreisförmig. Eine derartige Dichtschneide kann relativ einfach und kostengünstig hergestellt werden, wobei ein Innendurchmesser und ein Außendurchmesser der Dichtschneide entlang des Umfangs konstant bleibt.

Alternativ ist eine geometrische Form der Dichtschneide wellenförmig und insbesondere sinusförmig. Hierdurch wird eine mäanderförmige Dichtschneide erhalten, welche insgesamt eine längere Dichtlinie als die kreisförmige Dichtschneide aufweist.

Weiter alternativ ist die geometrische Form der Dichtschneide ungefähr zinnenförmig mit radial vorstehenden Bereichen und radial zurückgezogenen Bereichen. Hierbei ergeben sich Taschen an der radialen Außenseite und der radialen Innenseite der Dichtschneide. Vorzugsweise sind die Längen der Taschen in Umfangsrichtung konstant. Es ist allerdings besonders bevorzugt, dass die Taschen in Umfangsrichtung unterschiedliche Längen aufweisen. Dabei wird bevorzugt die Tasche mit einer längeren Umfangslänge versehen, welche zum abzudichtenden Produkt gerichtet ist. Die entgegengesetzt liegende Tasche wird mit einer geringeren Umfangslänge vorgesehen.

Eine weitere bevorzugte Alternative der Erfindung liegt darin, dass die Dichtschneide eine variierende Breite in Radialrichtung aufweist. Die Breite ist vorzugsweise so vorgesehen, dass eine regelmäßige variierende Breite vorgesehen ist. Hierdurch kann insbesondere eine Versorgung mit OH⁻-Ionen und/oder H+-lonen verbessert werden.

Eine besonders gute Stabilität und Abdichtung wird erreicht, wenn die Dichtschneide ein Verhältnis einer Höhe zu einer Breite der Dichtschneide in einem Bereich von 0,002 bis 2 aufweist, vorzugsweise 0,5 bis 1,5.

Ferner bevorzugt weist die zweite Gleitfläche, an welcher die Dichtschneide angeordnet ist, zusätzlich Stützstrukturen an einer Grundfläche der zweiten Gleitfläche auf. Die Stützstrukturen sind vorzugsweise ausschließlich an der zum abzudichtenden Produkt gerichteten Grundseite der zweiten Gleitfläche vorgesehen. Die Stützstrukturen sind vorzugsweise aus dem gleichen Material wie die Dichtschneide. Die Stützstrukturen können einzeln auf der Gesamtfläche angeordnet werden, oder die Stützstrukturen sind mit der Dichtschneide verbunden.

Um eine Redundanz der Abdichtung zu ermöglichen, weist die erfindungsgemäße Gleitringdichtungsanordnung ferner bevorzugt eine zweite Dichtschneide auf. Die zweite Dichtschneide weist bevorzugt eine geringere Höhe als die erste Dichtschneide auf. Die zweite Dichtschneide kann dabei die geometrisch gleiche Form wie die erste Dichtschneide aufweisen oder auch eine andere geometrische Form aufweisen. Die zweite Dichtschneide ist ebenfalls an der zweiten Gleitfläche ausgebildet.

Vorzugsweise ist das Spendermedium, welches die OH⁻-Ionen und/oder die H+-lonen bereitstellt, flüssig oder gasförmig oder ein Gas-Flüssigkeits-Gemisch. Hierbei ist besonders bevorzugt Wasser als OH⁻-Ionen-Spender und/oder H+-Ionen-Spender vorgesehen. Hierbei kann reines Wasser verwendet werden oder Wasser ist Teil eines Gemisches.

Die Dichtschneide weist bevorzugt eine Höhe von kleiner gleich 20 µm auf.

Weiter bevorzugt variiert die Breite der Dichtschneide zwischen 30 µm und 60 µm.

Weiter weist die zweite Gleitfläche einen ersten und einen zweiten sich verjüngenden Bereich sowie einen ebenen Bereich auf. Der ebene Bereich ist zwischen den beiden sich verjüngenden Bereichen angeordnet. Die beiden sich verjüngenden Bereiche grenzen an den inneren Umfang bzw. den äusseren Umfang des Gleitringes an. Die Dichtschneide ist am ebenen Bereich der zweiten Gleitfläche vorgesehen. Durch die sich verjüngenden Bereiche ergeben sich somit am inneren Umfang und am äusseren Umfang des Gleitringes grössere Räume, in welchem Fluid vorhanden ist, so dass im Betrieb eine reduzierte Scherkraft in den Fluiden und somit eine reduzierte innere Reibung in den Fluiden im Bereich des inneren und äusseren Umfanges der Gleitringe vorhanden ist.

Besonders bevorzugt weist auch der andere der beiden Gleitringe den Aufbau mit einem ersten und einem zweiten sich verjüngenden Bereich und einem dazwischen angeordneten ebenen Bereich auf, welcher der Dichtschneide gegenüber liegt. Hierdurch liegen sich an den Gleitringen jeweils zwei sich verjüngende Bereiche gegenüber, so dass der Raum an den sich verjüngenden Bereichen in Radialrichtung der Gleitringe nach innen und aussen immer grösser wird und nur der mittlere Bereich die eigentlichen Gleitflächen bereitstellt. Hierdurch kann der Scherwiderstand in den inneren und äusseren Umfangsbereichen der Gleitringe signifikant reduziert werden.

Eine erste und zweite Breite der ersten und zweiten sich verjüngenden Bereiche ist vorzugsweise gleich breit wie eine dritte Breite des zwischen sich den verjüngenden Bereichen angeordneten ebenen Bereichs. Somit weist jeder der drei Bereiche an der Gleitfläche ein Drittel der Gesamtbreite des Gleitringes in Radialrichtung auf.

Weiter bevorzugt ist die Dichtschneide mittig auf dem ebenen Bereich angeordnet.

Nachfolgend werden bevorzugte Ausführungsbeispiele der Erfindung unter Bezugnahme auf die begleitende Zeichnung im Detail beschrieben. In der Zeichnung sind gleiche bzw. funktional gleiche Teile mit den gleichen Bezugszeichen bezeichnet. In der Zeichnung ist:
- Figur 1: eine schematische Schnittansicht einer Gleitringdichtungsanordnung gemäß einem ersten Ausführungsbeispiel der Erfindung,
- Figur 2: eine schematische, vergrößerte Teilausschnittsansicht der Gleitringdichtungsanordnung von Figur 1,
- Figur 3: eine schematische Teildraufsicht auf den eine Dichtschneide aufweisenden Gleitring,
- Figur 4: eine schematische Schnittansicht des Gleitrings von Figur 3,
- Figur 5: eine schematische Draufsicht auf den Dichtring von Figur 3,
- Figur 6: eine schematische Teildraufsicht eines Gleitrings einer Gleitringdichtungsanordnung gemäß einem zweiten Ausführungsbeispiel,
- Figur 7: eine schematische Teildraufsicht eines Gleitrings einer Gleitringdichtungsanordnung gemäß einem dritten Ausführungsbeispiel,
- Figur 8: eine schematische Teildraufsicht eines Gleitrings einer Gleitringdichtungsanordnung gemäß einem vierten Ausführungsbeispiel,
- Figur 9: eine schematische Teildraufsicht eines Gleitrings einer Gleitringdichtungsanordnung gemäß einem fünften Ausführungsbeispiel,
- Figur 10: eine schematische Teildraufsicht eines Gleitrings einer Gleitringdichtungsanordnung gemäß einem sechsten Ausführungsbeispiel,
- Figur 11: eine schematische Schnittansicht von Figur 10, und
- Figur 12: eine schematische Schnittansicht einer Gleitringdichtungsanordnung gemäss einem siebten Ausführungsbeispiel der Erfindung

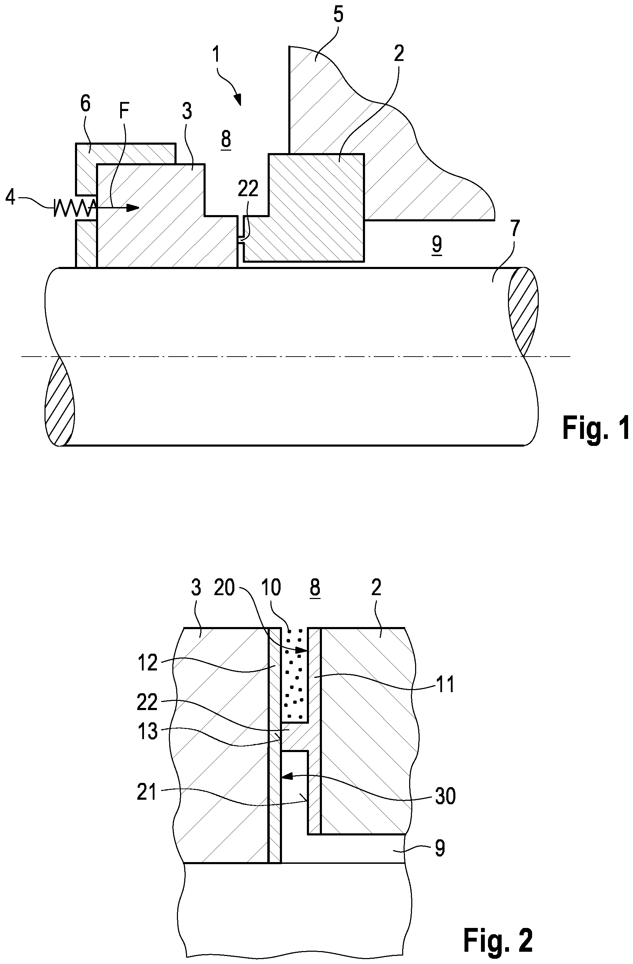

Nachfolgend wird unter Bezugnahme auf die Figuren 1 bis 5 eine Gleitringdichtungsanordnung 1 gemäß einem ersten bevorzugten Ausführungsbeispiel der Erfindung im Detail beschrieben.

Wie aus Figur 1 ersichtlich ist, umfasst die Gleitringdichtungsanordnung 1 eine Gleitringdichtung mit einem rotierenden Gleitring 3 und einem stationären Gleitring 2. Einer der beiden Gleitringe weist eine ebene erste Gleitfläche auf und der andere der beiden Gleitringe weist eine zweite Gleitfläche mit einer umlaufend geschlossenen Dichtschneide 22 auf. Die Gleitringdichtung dichtet zwischen einer Produktseite 8 und einer Atmosphärenseite 9 ab.

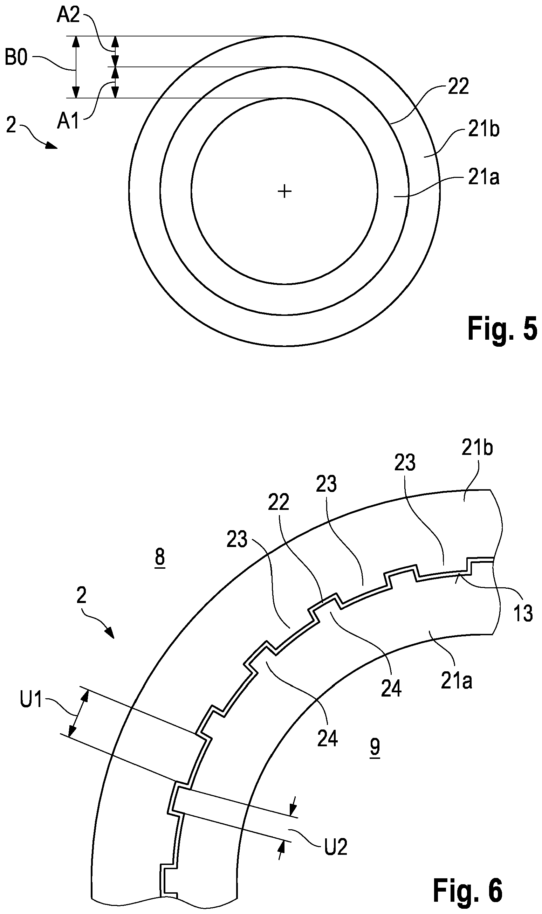

Wie insbesondere aus den Figuren 2, 3 und 4 ersichtlich ist, ist die ebene erste Gleitfläche 30 am rotierenden Gleitring 3 gebildet. Am stationären Gleitring 2 ist eine zweite Gleitfläche 20 mit der Dichtschneide 22 gebildet. Wie aus Figur 5 ersichtlich ist, ist die Dichtschneide 22 in Radialrichtung des stationären Gleitrings 2 mittig angeordnet. D. h. ein erster Abstand A1 von der Dichtschneide 22 zum Innenumfang des stationären Gleitrings ist gleich einem zweiten radialen Abstand A2 von der Dichtschneide 22 zum Außenumfang des stationären Gleitrings 2.

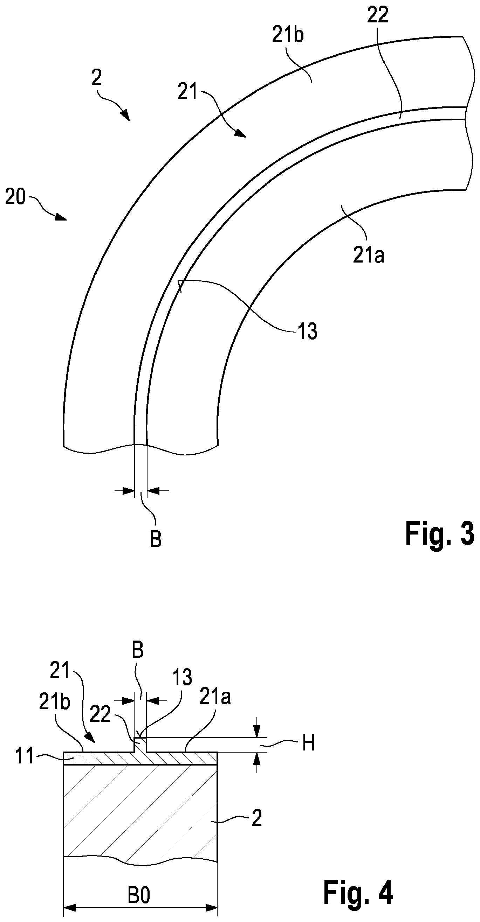

Wie aus den Figuren 3 und 4 ersichtlich ist, weist der stationäre Gleitring 2 einen Grundbereich 21 und die Dichtschneide 22 auf. Die Dichtschneide 22 teilt somit den Grundbereich 21 in einen ersten Grundteilbereich 21a und einen zweiten Grundteilbereich 21b. Die Flächen der ersten und zweiten Grundteilbereiche 21a, 21b sind dabei gleich.

Alternativ sind die Ringbreiten der ersten und zweiten Grundteilbereiche 21a, 21b gleich.

Es sei angemerkt, dass in den Figuren die Dichtschneide 22 in stark vergrößertem Maßstab dargestellt ist, um eine Erkennbarkeit der Erfindung zu erleichtern. Die Dichtschneide 22 weist tatsächlich eine Breite B in einem Bereich von 10 bis 500 µm auf und weist vorzugsweise eine Breite B von kleiner gleich 60 µm auf. D. h. die Dichtschneide 22 weist eine Breite B auf (siehe Figur 3 und 4), welche kleiner als eine durchschnittliche Breite eines menschlichen Haars ist, welches ungefähr 100 µm aufweist.

Wie in Figur 4 gezeigt, weist die Dichtschneide 22 eine Höhe H vom Grundbereich 21 auf, welche im Bereich von 3 bis 5 µm liegt.

Im Vergleich zu einer Gesamtbreite B0 der zweiten Gleitfläche 20 ist die Breite B der Dichtschneide 22 kleiner als 1 % der Gesamtbreite B0, vorzugsweise kleiner 0,6 % der Gesamtbreite B0 der zweiten Gleitfläche 20.

Die erste Gleitfläche 30 ist eben gebildet (vgl. Figur 2) und weist bevorzugt eine zirkulare Ebenheit von kleiner gleich 0,5 µm auf. Ferner weist die erste Gleitfläche 30 des rotierenden Gleitrings 3 eine mittlere Rauheit Ra kleiner gleich 0,02 µm auf, vorzugsweise kleiner gleich 0,01 µm auf. Die erste Gleitfläche 30 ist mit einer Diamantbeschichtung 12 beschichtet.

Der stationäre Gleitring 2 ist an einem Gehäuse 5 fixiert und der rotierende Gleitring 3 ist mittels eines Mitnehmers 6 an einer Welle 7 angeordnet und rotiert mit dieser.

Ferner ist ein Vorspannelement 4 vorgesehen, welches eine Vorspannkraft F auf den rotierenden Gleitring 3 ausübt. Dadurch ergibt sich zwischen dem stationären Gleitring 2 und dem rotierenden Gleitring 3 ein Kontaktdruck zwischen der Dichtschneide 22 und der ersten ebenen Gleitfläche 30, welcher vorzugsweise in einem Bereich zwischen 10 x 10⁵ Pa und 1.000 x 10⁵ Pa liegt.

Die erste Gleitfläche 30 des rotierenden Gleitrings 3 ist vorzugsweise poliert, um eine möglichst geringe mittlere Rauheit aufzuweisen.

Ferner ist die Dichtschneide 22 derart ausgelegt, dass ein Verhältnis der Höhe H zur Breite B in einem Bereich von 0,002 bis 2 liegt.

Ein Belastungsfaktor (k-Faktor) der Gleitringdichtung liegt in einem Bereich von 0 bis 0,3. Der Belastungsfaktor k ist eine dimensionslose geometrische Kenngröße, welche ein Flächenverhältnis der Gleitringdichtung festlegt und ist definiert als Verhältnis der hydraulisch belasteten Fläche zur Kontaktfläche an den Gleitringflächen..

In diesem Ausführungsbeispiel weisen sowohl die erste Gleitfläche 30 als auch die zweite Gleitfläche 20 jeweils eine Diamantbeschichtung 11, 12 auf. Dabei ist die Dichtschneide 22 vollständig aus Diamantmaterial hergestellt. Alternativ sind die erste und zweite Gleitfläche aus kubischem Bornitrid hergestellt und auch die Dichtschneide 22 ist alternativ vollständig aus kubischem Bornitrid hergestellt. Somit stellt die Dichtschneide 22 eine Kontakfläche 13 für den Gleitvorgang an der ersten Gleitfläche 30 bereit.

Eine Dicke der Diamantbeschichtung 11, 12 auf den Gleitringen beträgt ca. 8 µm. Die Höhe H der Dichtschneide 22 ist somit kleiner als die Dicke der Beschichtung auf einem Substrat, welches den Basisring definiert.

Ferner ist zwischen den Kontaktflächen der Gleitringe ein OH⁻-Ionen-Spender 10 und/oder ein H+-Ionen-Spender 10 vorgesehen. In diesem Ausführungsbeispiel ist hierbei Wasser vorgesehen.

Durch das Zusammenspiel der erfindungsgemäßen Maßnahmen, nämlich der sehr schmalen Dichtschneide 22, welche auf der ebenen ersten Gleitfläche 30 läuft und dem Vorhandensein eines OH⁻-Ionen-Spenders und/oder eines H+-Ionen-Spenders in Form von Wasser und der Vorspannkraft F ergibt sich zwischen der Dichtschneide 22 und der ersten Gleitfläche 30 ein Abstand von ca. 3 Å. Die OH⁻-Ionen oder die H+-Ionen lagern sich dabei an freien Bindungsplätzen der Diamantbeschichtungen an, sodass die Gleitringdichtung auf einem lonenkissen läuft. Hierdurch kann ein minimalster Reibwert von unter 0,003 erreicht werden, sodass praktisch ein verschleißfreier Betrieb der Gleitringdichtung möglich ist. Im Betrieb stellt sich somit ein Gleichgewicht ein, wobei eine minimale Leckage durch den minimalen Spalt von kleiner gleich 3 Å gelangt. Aufgrund des niederen Reibwerts ergibt sich auch eine vernachlässigbar kleine Reibwärme, sodass auch keine Maßnahmen hinsichtlich einer notwendigen Kühlung der Gleitringe notwendig ist. Aufgrund der minimalen Leckage sind gesperrte Dichtungssysteme nicht notwendig, das heißt es ist auch keine Versorgungseinrichtung zur Versorgung der Gleitringdichtung mit einem Schmiermittel oder dergleichen notwendig. Hierdurch können signifikante Einsparungen hinsichtlich der Investitionen bei Gleitringdichtungssystemen ermöglicht werden.

Erfindungsgemäß wird somit zum ersten Mal eine Lösung gegeben, welche eine praktisch leckagefreie Gleitringdichtungsanordnung bereitstellt oder höchstens eine kaum bemerkbare Leckage im atomaren Bereich auftritt.

Figur 6 zeigt eine Gleitringdichtungsanordnung gemäß einem zweiten Ausführungsbeispiel der Erfindung. Wie aus Figur 6 ersichtlich ist, ist die Dichtschneide 22 in diesem Ausführungsbeispiel nicht kreisrund, wie im ersten Ausführungsbeispiel, sondern weist eine zinnenförmige Gestalt auf. Hierbei ergeben sich in Radialrichtung nach außen gerichtete erste Taschen 23 und in Radialrichtung nach innen gerichtete zweite Taschen 24. Wie aus Figur 6 ersichtlich ist, sind die ersten und zweiten Taschen unterschiedlich groß vorgesehen. Die ersten Taschen 23 sind größer als die zweiten Taschen 24. Hierbei weisen die ersten Taschen 23 eine erste Länge U1 in Umfangsrichtung auf, welche doppelt so groß ist wie eine zweite Länge U2 der zweiten Taschen 24 in Umfangsrichtung. Die Länge der Taschen in Umfangsrichtung wird dabei jeweils am Fuß der Taschen gemessen. Die ersten und zweiten Taschen 23, 24 an der Dichtschneide 22 bewirken , dass im Gegensatz zu einer kreisrunden Ausführung das Bereitstellen von OH⁻-Ionen und/oder H+-Ionen an den Gleitflächen verbessert wird. Somit kann der OH⁻-Ionen-Spender und/oder der H+-Ionen-Spender unmittelbar benachbart zur Dichtschneide 22 gespeichert werden. Ferner wird durch die zinnenförmige Gestalt der Dichtschneide 22 eine Gesamtlänge der Dichtschneide länger als im Vergleich mit einer kreisrunden Schneide. Ansonsten werden die gleichen Vorteile wie im ersten Ausführungsbeispiel erhalten.

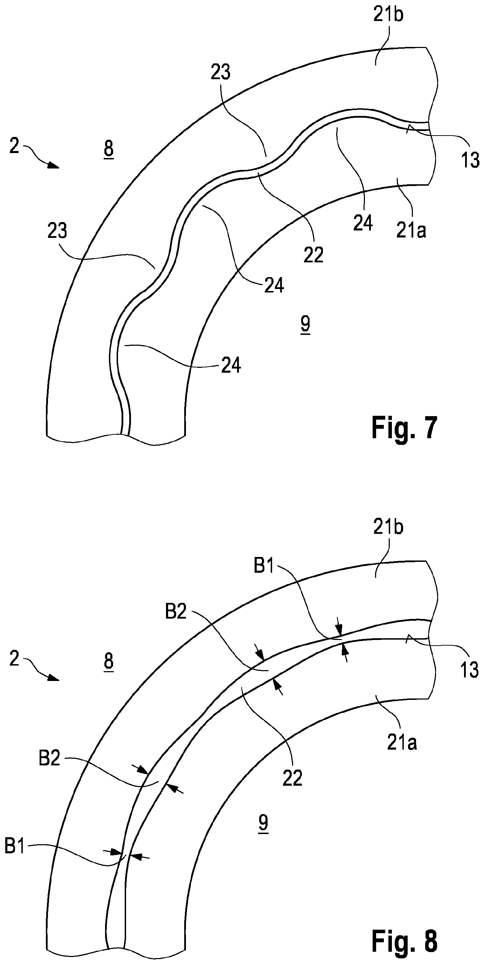

Figur 7 zeigt eine Gleitringdichtungsanordnung gemäß einem dritten Ausführungsbeispiel der vorliegenden Erfindung. Beim dritten Ausführungsbeispiel ist die Dichtschneide 22 derart vorgesehen, dass die Dichtschneide 22 eine sinusförmige geometrische Gestalt aufweist. Hierdurch ergeben sich ebenfalls erste und zweite Taschen 23, 24 an der Dichtschneide 22. Auch hierdurch wird im Vergleich mit einer kreisförmigen Dichtschneide eine längere Dichtlänge erreicht. Die Taschen haben die gleiche Funktion wie im zweiten Ausführungsbeispiel.

Figur 8 zeigt eine Gleitringdichtungsanordnung gemäß einem vierten Ausführungsbeispiel der vorliegenden Erfindung. Beim vierten Ausführungsbeispiel weist die Dichtschneide 22 eine sich regelmäßig variierende Breite auf. Wie aus Figur 8 ersichtlich ist, ist die schmalste Breite der Dichtschneide 22 mit dem Bezugszeichen B1 gekennzeichnet und die jeweils breiteste Stelle der Dichtschneide 22 ist mit dem Bezugszeichen B2 gekennzeichnet. Die kleine Breite B1 entspricht dabei der Hälfte der großen Breite B2. Die sich variierende Breite ist dabei regelmäßig vorgesehen. Beispielsweise kann diese Dichtschneide 22 durch zwei um 180° gegeneinander versetzt laufende Sinuskurven erzeugt werden, welche die Wände der Dichtschneide 22 bilden.

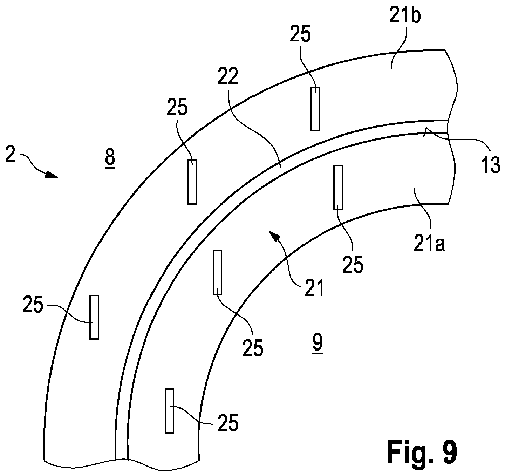

Figur 9 zeigt eine Gleitringdichtungsanordnung mit einem stationären Gleitring 2 gemäß einem fünften Ausführungsbeispiel der Erfindung. Wie im ersten Ausführungsbeispiel weist der stationäre Gleitring 2 eine kreisförmige Dichtschneide 22 auf. Ferner sind am ersten und zweiten Grundbereich 21a, 21b zusätzlich noch Stützstrukturen 25 vorgesehen. Die Stützstrukturen 25 weisen in diesem Ausführungsbeispiel eine rechteckige Grundform auf und weisen ferner eine Höhe auf, welche gleich der Höhe der Dichtschneide 22 ist Die Stützstrukturen stellen im Betrieb sicher, dass eine radiale Verkippung der Gleitringe vermieden wird. Dadurch kann im Betrieb ein Dichtspalt im Bereich von 3 Å sichergestellt werden. Die Stützstrukturen 25 sind aus dem gleichen Material wie die Beschichtung des stationären Gleitrings 2 vorgesehen, vorzugsweise aus Diamant. Die Stützstrukturen 25 sind in diesem Ausführungsbeispiel jeweils einzeln auf dem Grundbereich 21 vorgesehen. Alternativ können die Stützstrukturen auch mit der Dichtscheibe 22 verbunden sein.

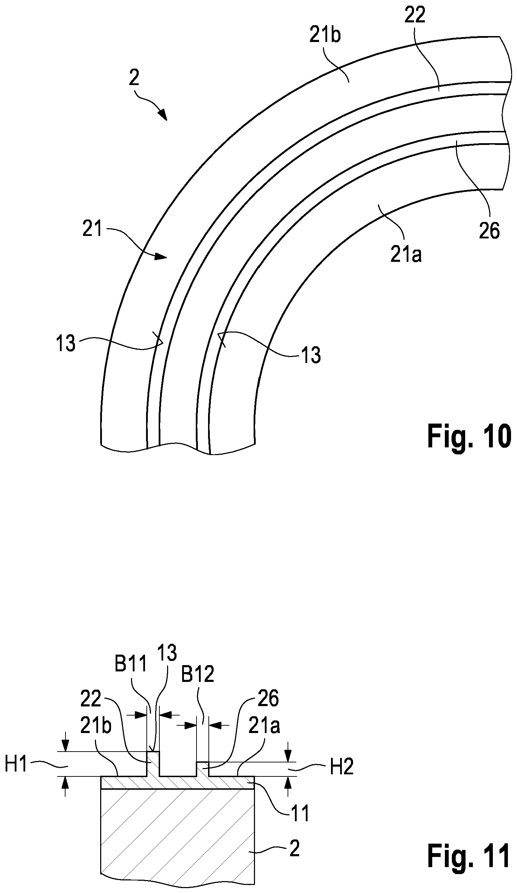

Die Figuren 10 und 11 zeigen eine Gleitringdichtungsanordnung mit einem stationären Gleitring 2 gemäß einem sechsten Ausführungsbeispiel der Erfindung. Wie aus Figur 10 ersichtlich ist, weist der stationäre Gleitring 2 eine erste Dichtschneide 22 und eine zweite Dichtschneide 26 auf. Die beiden Dichtschneiden 22, 26 sind jeweils kreisförmig vorgesehen. Dabei weist die erste Dichtschneide 22 eine größere Höhe H1 als die Höhe H2 der zweiten Dichtschneide 26 auf (siehe Figur 11). Somit dient die zweite Dichtschneide 26 als Reservedichtschneide, falls die erste Dichtschneide 22 beschädigt wird. Wie aus Figur 11 weiter ersichtlich ist, ist eine erste Breite B11 der ersten Dichtschneide 22 gleich einer zweiten Breite B12 der zweiten Dichtschneide 26. Die Dichtschneiden 22, 26 sind bevorzugt symmetrisch am stationären Gleitring 2 vorgesehen.

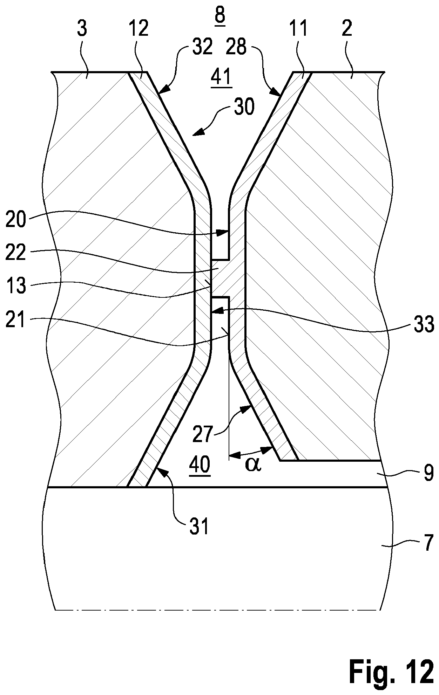

Die Figur 12 zeigt eine Gleitringdichtungsanordnung gemäss einem siebten Ausführungsbeispiel der Erfindung. Im Unterschied zu den vorhergehenden Ausführungsbeispielen weisen die Gleitflächen des stationären Gleitringes 2 des rotierenden Gleitringes 3 dabei jeweils drei Bereiche auf. Genauer weist der stationäre Gleitring 2 einen ersten sich verjüngenden Bereich 27 und einen zweiten sich verjüngenden Bereich 28 auf. Zwischen den beiden sich verjüngenden Bereichen 27, 28 ist ein ebener Grundbereich 21 vorgesehen, welcher die Dichtschneide 22 aufweist (vgl. Fig. 12). Die beiden sich verjüngenden Bereiche 27, 28 verjüngen sich dabei ausgehend vom Grundbereich 21.

In gleicher Weise wie die Gleitfläche des stationären Gleitringes 2 ist die erste Gleitfläche 30 des rotierenden Gleitringes 3 aufgebaut. Genauer weist die erste Gleitfläche 30 einen ersten sich verjüngenden Bereich 31, einen zweiten sich verjüngenden Bereich 32 und einen zwischen den beiden sich verjüngenden Bereichen 31, 32 angeordneten ebenen Bereich 33 auf. Wie aus Fig. 12 ersichtlich, ergibt sich dadurch ein innerer Raum 40 am inneren Umfang der Gleitringe und ein äusserer Raum 41 am äusseren Umfang der Gleitringe.

In diesem Ausführungsbeispiel sind die sich verjüngenden Bereiche konisch ausgebildet. Ein Winkel α der sich konisch verjüngenden Bereiche ist dabei jeweils gleich gewählt. Dadurch ergeben sich gleich grosse innere und äussere Räume 40, 41.

Durch das _Vorsehen der inneren und äusseren Räume 40, 41 ergibt sich eine signifikant reduzierte auf Scherung beruhende Reibung der in diesen Bereichen vorhandenen Fluide. Hierdurch werden Verluste signifikant reduziert.

Die Dichtschneide 22 ist in der Mitte des ebenen Grundbereiches 21 an der zweiten Gleitfläche 20 angeordnet. Die beiden sich verjüngenden Bereiche 27, 28 und der ebene Grundbereich 21 am ersten _Gleitring 2 weisen dabei ungefähr die gleiche Breite in Radialrichtung auf. In gleicher Weise sind die Breiten der ersten und zweiten sich verjüngenden Bereiche 31, 32 und des ebenen Bereiches 33 am rotierenden Gleitring 3 mit jeweils einem Drittel der Gesamtbreite vorgesehen. Somit kann beim siebten Ausführungsbeispiel eine Fläche an den Gleitringen, welche sich unmittelbar gegenüberliegen, reduziert werden. Durch die Dichtschneide 22 ist es somit möglich, eine Grösse der einander unmittelbar gegenüberliegenden Flächen zu reduzieren und somit Verluste im Betrieb zu reduzieren.

Zu allen beschriebenen Ausführungsbeispielen sei angemerkt, dass die Dichtschneiden 22 jeweils am stationären Gleitring 2 vorgesehen sind und der rotierende Gleitring 3 eine ebene erste Gleitfläche 30 aufweist. Es ist jedoch erfindungsgemäß auch möglich, dass die Dichtschneiden an der ersten Gleitfläche 30 des rotierenden Gleitrings 3 vorgesehen sind und die zweite Gleitfläche 20 des stationären Gleitrings 2 als ebene Fläche ausgebildet ist. Mit anderen Worten funktioniert die Erfindung unabhängig davon, welche der Gleitflächen der Gleitringe die Dichtschneide 22 aufweist und welche der Gleitflächen die ebene Gleitfläche ist.

Neben der vorstehenden schriftlichen Beschreibung der Erfindung wird zu deren ergänzender Offenbarung hiermit explizit auf die zeichnerische Darstellung der Erfindung in den Fig. 1 bis 12 Bezug genommen.

### Bezugszeichenliste

- 1: Gleitringdichtungsanordnung
- 2: Stationärer Gleitring
- 3: Rotierender Gleitring
- 4: Vorspannelement
- 5: Gehäuse
- 6: Mitnehmer
- 7: Welle
- 8: Produktseite
- 9: Atmosphärenseite
- 10: OH⁻-Ionen-Spender und/oder H+-Ionen-Spender
- 11: Diamantbeschichtung am stationären Gleitring
- 12: Dimantbeschichtung am rotierenden Gleitring
- 13: Kontaktfläche an der Dichtschneide20 zweite Gleitfläche
- 21: Grundbereich
- 21a: erster Grundteilbereich
- 21b: zweiter Grundteilbereich
- 22: Dichtschneide
- 23: erste Tasche
- 24: zweite Tasche
- 25: Stützstruktur
- 26: zweite Dichtschneide
- 27: erster sich verjüngender Bereich
- 28: zweiter sich verjüngender Bereich
- 30: erste Gleitfläche
- 31: erster sich verjüngender Bereich
- 32: zweiter sich verjüngender Bereich
- 33: ebener Bereich
- 40: innerer Raum
- 41: äusserer Raum
- α: Winkel des sich verjüngenden Bereiches
- A1: erster Abstand
- A2: zweiter Abstand
- B: Breite der Dichtschneide
- B0: Gesamtbreite der zweiten Gleitfläche
- B1: minimale Breite
- B2: maximale Breite
- B11: Breite der ersten Dichtschneide
- B12: Breite der zweiten Dichtschneide
- F: Vorspannkraft
- H: Höhe der Dichtschneide
- H1: Höhe der ersten Dichtschneide
- H2: Höhe der zweiten Dichtschneide
- U1: erste Länge
- U2: zweite Länge

## Patentansprüche

1. Gleitringdichtungsanordnung, umfassend:
- eine Gleitringdichtung mit einem rotierenden Gleitring (3) und einem stationären Gleitring (2),
- wobei einer der beiden Gleitringe eine erste Gleitfläche (30) aufweist,
- wobei der andere der beiden Gleitringe eine zweite Gleitfläche (20) mit einer umlaufend geschlossenen Dichtschneide (22) aufweist, welche von einem Grundbereich (21) der zweiten Gleitfläche in Richtung zur ersten Gleitfläche (30) um eine Höhe (H) vorsteht,
- wobei wenigstens ein Vorspannelement (4) die Gleitringe gegeneinander vorspannt,
- wobei die zweite Gleitfläche (20) und die Dichtschneide (22) an der zweiten Gleitfläche (20) eine Diamantbeschichtung aufweisen, oder wobei die zweite Gleitfläche (20) und die Dichtschneide (22) an der zweiten Gleitfläche (20) eine kubische Bornitridbeschichtung aufweisen, und
**dadurch gekennzeichnet dass** die Dichtschneide (22) eine Breite (B) aufweist, welche in einem Bereich zwischen 10 bis 500 µm liegt, und zwischen der ersten Gleitfläche (30) und der zweiten Gleitfläche (20) ein OH-Ionen-Spender (10) und/oder ein H+-Ionen-Spender (10) vorhanden ist.

2. Gleitringdichtungsanordnung nach Anspruch 1, wobei die Dichtschneide (22) vollständig aus Diamant hergestellt ist oder wobei die Dichtschneide (22) vollständig aus kubischem Bornitrid hergestellt ist.

3. Gleitringdichtungsanordnung nach Anspruch 1 oder 2 wobei die Breite (B) der Dichtschneide (22) kleiner gleich 60 µm ist und/oder die Höhe (H) der Dichtschneide (22) kleiner gleich 5 µm ist.

4. Gleitringdichtungsanordnung nach einem der vorhergehenden Ansprüche, wobei die erste Gleitfläche (30) eine mittlere Rauheit von kleiner gleich 0,02 µm aufweist.

5. Gleitringdichtungsanordnung nach einem der vorhergehenden Ansprüche, wobei ein Belastungsfaktor (k) der Gleitringdichtung in einem Bereich zwischen 0 bis 0,3 liegt.

6. Gleitringdichtungsanordnung nach einem der vorhergehenden Ansprüche, wobei die erste Gleitfläche (30) eine zirkuläre Ebenheit von kleiner gleich 5 µm, insbesondere kleiner gleich 0,5 µm, aufweist.

7. Gleitringdichtungsanordnung nach einem der vorhergehenden Ansprüche, wobei die Dichtschneide (22) kreisförmig ist.

8. Gleitringdichtungsanordnung nach einem der Ansprüche 1 bis 6, wobei die Dichtschneide wellenförmig, insbesondere sinusförmig ist.

9. Gleitringdichtungsanordnung nach einem der Ansprüche 1 bis 6, wobei die Dichtschneide zinnenförmig oder mäanderförmig ist.

10. Gleitringdichtungsanordnung nach Anspruch 9, wobei die zinnenförmige oder mäanderförmige Dichtschneide an einer radial nach außen gerichteten Seite erste Taschen (23) aufweist und an einer radial nach innen gerichteten Seite zweite Taschen (24) aufweist, wobei eine Umfangslänge der ersten Taschen (23) zu einer Umfangslänge der zweiten Taschen (24) unterschiedlich ist.

11. Gleitringdichtungsanordnung nach einem der vorhergehenden Ansprüche, wobei die Dichtschneide (22) eine variierende Breite (B1, B2) aufweist.

12. Gleitringdichtungsanordnung nach einem der vorhergehenden Ansprüche, wobei die Dichtschneide (22) ein Verhältnis der Höhe (H) zur Breite (B) in einem Bereich von 0,002 bis 2 aufweist.

13. Gleitringdichtungsanordnung nach einem der vorhergehenden Ansprüche, wobei die zweite Gleitfläche (20) Stützstrukturen (25) am Grundbereich (21) aufweist.

14. Gleitringdichtungsanordnung nach einem der vorhergehenden Ansprüche, ferner umfassend eine zweite Dichtschneide (26) an der zweiten Gleitfläche (20).

15. Gleitringdichtungsanordnung nach Anspruch 13, wobei die zweite Dichtschneide (26) eine zweite Höhe (H2) aufweist, welche kleiner als eine erste Höhe (H1) der ersten Dichtschneide (22) ist.

16. Gleitringdichtungsanordnung nach einem der vorhergehenden Ansprüche, wobei der OH-Ionen-Spender und/oder der H+-Ionen-Spender eine Flüssigkeit ist oder ein Gas ist oder ein Gas-Flüssigkeits-Gemisch ist.

17. Gleitringdichtungsanordnung nach Anspruch 15, wobei der OH-Ionen-Spender (10) und/oder der H+-Ionen-Spender (10) Wasser ist oder einen Anteil von Wasser aufweist oder Wasserdampf ist oder einen Anteil von Wasserdampf aufweist.

18. Gleitringdichtungsanordnung nach einem der vorhergehenden Ansprüche, wobei die zweite Gleitfläche (20) einen ersten sich verjüngenden Bereich (27), einen zweiten sich verjüngenden Bereich (28) aufweist und einen ebenen Bereich (21) aufweist, wobei der ebene Bereich zwischen dem ersten und zweiten sich verjüngenden Bereich (27, 28) angeordnet, und wobei die Dichtschneide (22) am ebenen Bereich angeordnet.

19. Gleitringdichtungsanordnung nach Anspruch 18, wobei eine Breite des ersten und zweiten sich verjüngenden Bereiches (27, 28) in Radialrichtung gleich einer Breite des ebenen Bereiches ist und/oder wobei die erste Gleitfläche (30) einen ersten sich verjüngenden Bereich (31), einen zweiten sich verjüngenden Bereich (32) und einen ebenen Bereich (33), welcher zwischen den beiden sich verjüngenden Bereichen (31, 32) angeordnet ist,, aufweist.

## Claims

1. Mechanical seal arrangement, comprising:
- a mechanical seal with a rotating slide ring (3) and a stationary slide ring (2),
- wherein one of the two slide rings has a first sliding surface (30),
- wherein the other of the two slide rings has a second sliding surface (20) with a circumferentially closed sealing edge (22), which projects from a base area (21) of the second sliding surface in the direction towards the first sliding surface (30) by a height (H),
- wherein at least one pre-stressing element (4) pre-stresses the slide rings against each other,
- wherein the second sliding surface (20) and the sealing edge (22) have a diamond coating at the second sliding surface (20), or wherein the second sliding surface (20) and the sealing edge (22) have a cubic boron nitride coating at the second sliding surface (20), and
**characterized in that** the sealing edge (22) has a width (B) which is in an area between 10 to 500 µm, and
- between the first sliding surface (30) and the second sliding surface (20) a OH ion donor (10) and/or a H+ ion donor (10) is present.

2. Mechanical seal arrangement according to claim 1, wherein the sealing edge (22) is made completely of diamond or wherein the sealing edge (22) is made completely of cubic boron nitride.

3. Mechanical seal arrangement according to claim 1 or 2, wherein the width (B) of the sealing edge (22) is smaller than or equal to 60 µm and/or the height (H) of the sealing edge (22) is smaller than or equal to 5 µm.

4. Mechanical seal arrangement according to any of the preceding claims, wherein the first sliding surface (30) has a medium roughness of smaller than or equal to 0.02 µm.

5. Mechanical seal arrangement according to any of the preceding claims, wherein a load factor (k) of the slide ring seal is in a range of between 0 to 0.3.

6. Mechanical seal arrangement according to any of the preceding claims, wherein the first sliding surface (30) has a circular flatness of smaller than or equal to 5 µm, in particular smaller than or equal to 0.5 µm.

7. Mechanical seal arrangement according to any of the preceding claims, wherein the sealing edge (22) is circular.

8. Mechanical seal arrangement according to any of the claims 1 to 6, wherein the sealing edge is wave-shaped, in particular sine-shaped.

9. Mechanical seal arrangement according to any of the claims 1 to 6, wherein the sealing edge is crenellation-shaped or meander-shaped.

10. Mechanical seal arrangement according to claim 9, wherein die crenellation-shaped or meander-shaped sealing edge has first pockets (23) at a radially outwardly directed side and has second pockets (24) at a radially inwardly directed side, wherein a circumferential length of the first pockets (23) differs from a circumferential length of the second pockets (24).

11. Mechanical seal arrangement according to any of the preceding claims, wherein the sealing edge (22) has a varying width (B1, B2).

12. Mechanical seal arrangement according to any of the preceding claims, wherein the sealing edge (22) has a ratio of the height (H) to the width (B) in a range of 0.002 to 2.

13. Mechanical seal arrangement according to any of the preceding claims, wherein the second sliding surface (20) has support structures (25) at the base area (21).

14. Mechanical seal arrangement according to any of the preceding claims, further comprising a second sealing edge (26) at the second sliding surface (20).

15. Mechanical seal arrangement according to claim 13, wherein the second sealing edge (26) has a second height (H2) that is smaller than a first height (H1) of the first sealing edge (22).

16. Mechanical seal arrangement according to any of the preceding claims, wherein the OH ion donor and/or the H+ ion donor is a liquid or a gas or a gas-liquid s mixture.

17. Mechanical seal arrangement according to claim 15, wherein the OH ion donor (10) and/or the H+ ion donor (10) is water or has a content of water or is water vapor or has an content of water vapor.

18. Mechanical seal arrangement according to any of the preceding claims, wherein the second sliding surface (20) has a first tapering area (27), a second tapering area (28) and has a flat area (21), wherein the flat area is arranged between the first and second tapering area (27, 28), and wherein the sealing edge (22) [is] arranged at the flat area.

19. Mechanical seal arrangement according to claim 18, wherein a width of the first and second tapering area (27, 28) in the radial direction is equal to a width of the flat area and/or wherein the first sliding surface (30) has a first tapering area (31), a second tapering area (32) and a flat area (33) that is arranged between the two tapering areas (31, 32).

## Revendications

1. Ensemble joint d'étanchéité à bague glissante, comprenant :
- un joint d'étanchéité à bague glissante avec une bague glissante rotative (3) et une bague glissante fixe (2),
- dans lequel une des deux bagues glissantes présente une première surface glissante (30),
- dans lequel l'autre des deux bagues glissantes présente une deuxième surface glissante (20) avec une arête d'étanchéité (22) circonférentiellement fermée, laquelle fait saillie d'une hauteur (H) depuis une zone de base (21) de la deuxième surface glissante en direction de la première surface glissante (30),
- dans lequel au moins un élément de précontrainte (4) précontraint l'une contre l'autre les bagues glissantes,
- dans lequel la deuxième surface glissante (20) et l'arête d'étanchéité (22) présentent un revêtement en diamant au niveau de la deuxième surface glissante (20), ou dans lequel la deuxième surface glissante (20) et l'arête d'étanchéité (22) présentent un revêtement en nitrure de bore cubique au niveau de la deuxième surface glissante (20), et
**caractérisé en ce que** l'arête d'étanchéité (22) présente une largeur (B), laquelle se situe dans une plage entre 10 à 500 µm, et un distributeur d'ions OH (10) et/ou un distributeur d'ions H+ (10) est présent entre la première surface glissante (30) et la deuxième surface glissante (20).

2. Ensemble joint d'étanchéité à bague glissante selon la revendication 1, dans lequel l'arête d'étanchéité (22) est fabriquée entièrement en diamant ou dans lequel l'arête d'étanchéité (22) est fabriquée entièrement en nitrure de bore cubique.

3. Ensemble joint d'étanchéité à bague glissante selon la revendication 1 ou 2 dans lequel la largeur (B) de l'arête d'étanchéité (22) est inférieure ou égale à 60 µm et/ou la hauteur (H) de l'arête d'étanchéité (22) est inférieure ou égale à 5 µm.

4. Ensemble joint d'étanchéité à bague glissante selon l'une quelconque des revendications précédentes, dans lequel la première surface glissante (30) présente une rugosité moyenne inférieure ou égale à 0,02 µm.

5. Ensemble joint d'étanchéité à bague glissante selon l'une quelconque des revendications précédentes, dans lequel un facteur de charge (k) du joint d'étanchéité à bague glissante se situe dans une plage entre 0 à 0,3.

6. Ensemble joint d'étanchéité à bague glissante selon l'une quelconque des revendications précédentes, dans lequel la première surface glissante (30) présente une planéité circulaire inférieure ou égale à 5 µm, en particulier inférieure ou égale à 0,5 µm.

7. Ensemble joint d'étanchéité à bague glissante selon l'une quelconque des revendications précédentes, dans lequel l'arête d'étanchéité (22) est circulaire.

8. Ensemble joint d'étanchéité à bague glissante selon l'une quelconque des revendications 1 à 6, dans lequel l'arête d'étanchéité est ondulée, en particulier sinusoïdale.

9. Ensemble joint d'étanchéité à bague glissante selon l'une quelconque des revendications 1 à 6, dans lequel l'arête d'étanchéité est crénelée ou en forme de méandre.

10. Ensemble joint d'étanchéité à bague glissante selon la revendication 9, dans lequel l'arête d'étanchéité crénelée ou en forme de méandre présente des premières poches (23) au niveau d'un côté orienté radialement vers l'extérieur et présente des deuxièmes poches (24) au niveau d'un côté orienté radialement vers l'intérieur, dans lequel une longueur circonférentielle des premières poches (23) est différente d'une longueur circonférentielle des deuxièmes poches (24).

11. Ensemble joint d'étanchéité à bague glissante selon l'une quelconque des revendications précédentes, dans lequel l'arête d'étanchéité (22) présente une largeur (B1, B2) variable.

12. Ensemble joint d'étanchéité à bague glissante selon l'une quelconque des revendications précédentes, dans lequel l'arête d'étanchéité (22) présente un rapport hauteur (H) largeur (B) dans une plage de 0,002 à 2.

13. Ensemble joint d'étanchéité à bague glissante selon l'une quelconque des revendications précédentes, dans lequel la deuxième surface glissante (20) présente des structures d'appui (25) au niveau de la zone de base (21).

14. Ensemble joint d'étanchéité à bague glissante selon l'une quelconque des revendications précédentes, comprenant en outre une deuxième arête d'étanchéité (26) au niveau de la deuxième surface glissante (20).

15. Ensemble joint d'étanchéité à bague glissante selon la revendication 13, dans lequel la deuxième arête d'étanchéité (26) présente une deuxième hauteur (H2), laquelle est inférieure à une première hauteur (H1) de la première arête d'étanchéité (22).

16. Ensemble joint d'étanchéité à bague glissante selon l'une quelconque des revendications précédentes, dans lequel le distributeur d'ions OH et/ou le distributeur d'ions H+ est un liquide ou est un gaz ou est un mélange gaz-liquide.

17. Ensemble joint d'étanchéité à bague glissante selon la revendication 15, dans lequel le distributeur d'ions OH (10) et/ou le distributeur d'ions H+ (10) est de l'eau ou présente une part d'eau ou est de la vapeur d'eau ou présente une part de vapeur d'eau.

18. Ensemble joint d'étanchéité à bague glissante selon l'une quelconque des revendications précédentes, dans lequel la deuxième surface glissante (20) présente une première zone conique (27), une deuxième zone conique (28) et présente une zone plane (21), dans lequel la zone plane est agencée entre la première et la deuxième zone conique (27, 28), et dans lequel l'arête d'étanchéité (22) est agencée au niveau de la zone plane.

19. Ensemble joint d'étanchéité à bague glissante selon la revendication 18, dans lequel une largeur de la première et de la deuxième zone conique (27, 28) dans la direction radiale est égale à une largeur de la zone plane et/ou dans lequel la première surface glissante (30) présente une première zone conique (31), une deuxième zone conique (32) et une zone plane (33), laquelle est agencée entre les deux zones coniques (31, 32).
